# EUROPÄISCHE PATENTSCHRIFT

(11) **EP 3 180 853 B1**
(45) Veröffentlichungstag und Bekanntmachung des Hinweises auf die Patenterteilung: **22.01.2020**
(21) Anmeldenummer: 14755795.3
(22) Anmeldetag: 14.08.2014
(51) Int. Cl.: H02P 1/46, H02P 6/21

(54) **VERFAHREN ZUM ANLASSEN EINES KRAFTFAHRZEUG-ZUSATZAGGREGATS-ANTIEBSMOTORS**
METHOD FOR STARTING A DRIVE MOTOR OF AN AUXILIARY ASSEMBLY OF A MOTOR VEHICLE
PROCÉDÉ DE DÉMARRAGE D'UN MOTEUR D'ENTRAÎNEMENT DE MACHINE AUXILIAIRE DE VÉHICULE AUTOMOBILE

(43) Veröffentlichungstag der Anmeldung: 21.06.2017
(73) Patentinhaber: Pierburg Pump Technology GmbH, 41460 Neuss (DE)
(72) Erfinder: SCHUMACHERS, Martin, 41366 Schwalmtal (DE); JANSEN, Mario, 47447 Moers (DE); MERTENS, Joachim, 97353 Wiesentheid (DE)
(74) Vertreter: Patentanwälte ter Smitten Eberlein-Van Hoof Rütten Partnerschaftsgesellschaft mbB
(86) Internationale Anmeldenummer: PCT/EP2014/067425
(87) Internationale Veröffentlichungsnummer: WO 2016/023588

(56) Entgegenhaltungen:
- EP-A2- 1 076 408
- EP-A2- 2 107 677
- EP-A2- 2 343 797
- JP-A- 2000 253 691
- US-A- 5 814 957

## Beschreibung

Die Erfindung betrifft ein Verfahren zum Anlassen eines elektronisch kommutierten, bürstenlosen Kraftfahrzeug-Zusatzaggregat-Antriebsmotors (Antriebsmotor), insbesondere eines Gleichstrommotors einer Fluidpumpe.

Kraftfahrzeug-Zusatzaggregat-Antriebsmotoren, insbesondere BLDC-Motoren oder EC-Motoren, sind hinlänglich bekannt. Derartige Antriebsmotoren umfassen in der Regel einen Motor-Stator mit mindestens einer Stator-Spule und einen mit mindestens einem Permanentmagneten versehenen oder permanentmagnetischen Motor-Rotor, wobei die Stator-Spule mittels einer Steuerungselektronik und einer Leistungselektronik zur Erzeugung eines rotatorischen Erregerfeldes bzw. Drehfeldes zum Antreiben des Motor-Rotors mit einer vorgegebenen Spulen-Spannung und einer vorgegebenen konstanten Anlauf-Drehfrequenz bestrombar ist. Durch das Bestromen der Stator-Spule bzw. mehrerer Stator-Spulen in einem bestimmten Muster kann, beispielsweise von einem mehrphasigen und/oder mehrstrangigen in Stern- oder Dreieckschaltung aufgebauten Spulensystem, ein Drehfeld erzeugt werden, durch das der permanentmagnetische Motor-Rotor 'mitgenommen' bzw. angetrieben werden kann. Diese gezielte Bestromung der Spulen bzw. die Kommutierung der Spulen-Spannung erfolgt über ein gezieltes Schalten von Leistungshalbleitern.

Unter der Spulen-Spannung ist vorliegend ein Spannungsimpuls oder eine Effektiv-Spannung zu verstehen, die durch eine Taktung einer Versorgungsgleichspannung gemäß einem Tastverhältnis erzeugt ist, beispielsweise mit einer Frequenz von mehreren kHz. Das Tastverhältnis gibt dabei das Verhältnis einer Einschaltungszeit bzw. Ansteuerungsimpulse zu einer Periodendauer der zyklischen Ansteuerung an und bestimmt somit die effektive Spannung, die auf diese Weise an der Stator-Spule anlegbar ist. Die Taktung erfolgt mittels einer Steuerungselektronik und/oder einer Leistungselektronik. So kann die Steuerungselektronik zur Ansteuerung des Antriebsmotors mit einer variablen Leistung gemäß einer Pulsweitenmodulation die Leistungselektronik mit einem bestimmten Tastverhältnis ansteuern. Beispielsweise beginnt eine Ansteuerung mit einem Start-Tastverhältnis von 22/250, was etwa 10% der Versorgungsspannung entspricht. Dadurch kann eine Versorgungsgleichspannung von beispielsweise 12 Volt zu einer an der Spule anliegenden sehr viel geringeren effektiven Spannung getaktet werden, nämlich zu 1,2 Volt. Eine maximale Spulen-Spannung kann durch eine ungetaktete Weiterleitung der Versorgungsgleichspannung durch die Leistungselektronik an die Stator-Spule erreicht werden.

Zum Anlassen bzw. Starten des Antriebsmotors ist ein Abstimmen des Drehfeldes auf die Lage bzw. Bewegung des Motor-Rotors erforderlich. Dazu kann die Rotorlage entweder mittels eines Sensors oder sensorlos, beispielsweise über eine in den Stator-Spulen rückinduzierte Spannung ermittelt werden. Eine solche Messung versagt jedoch in der Regel bei Stillstand oder bei sehr geringen Geschwindigkeiten des Motor-Rotors, wie sie beim Anlassen des Kraftfahrzeug-Zusatzaggregat-Antriebsmotors auftreten, wegen der sehr kleinen rückinduzierten Signale. Daher ist für das Erkennen der Rotorlage in der Regel eine Mindestdrehzahl von ca. 10% der maximalen Rotor-Drehzahl erforderlich.

Bei bekannten Verfahren werden daher zum Anlassen eines solchen Antriebsmotors - zumindest bis zu einer Mindestdrehzahl - die Stator-Spulen mit einem festgelegten, in der Regel sehr hohen Start-Spannungswert bestromt, um unter allen möglichen Umständen ein Anlaufen des Motor-Rotors zu gewährleisten. Insbesondere hinsichtlich der Randbedingungen, wie Temperatur, Last oder Reibung, die ein Anlaufen des Rotors beeinflussen können, wird eine derart hohe Spulen-Spannung für den Startvorgang vorgegeben, dass ein so großes magnetisches Kraftfeld erzeugt wird, dass der Motor-Rotor nur dann nicht anlaufen würde, wenn eine mechanische Blockierung des Motor-Rotors vorliegt. In allen anderen Fällen würde der Motor-Rotor anlaufen.

Nach dem Anlaufen des Motor-Rotors werden die Stator-Spulen bekanntlich solange ungeregelt bzw. ,blind' nach einem starren Musterschema bzw. mit einer definierten Drehfrequenz angesteuert, bis der Motor-Rotor eine Mindestdrehzahl erreicht hat und das in den Spulen rückinduzierte Signal zur Rotorlageerkennung messbar und somit eine sensorlose Erfassung der Rotor-Lage möglich ist. Ab diesem Zeitpunkt kann in den geregelten kommutierten Betrieb umgeschaltet werden.

Folglich ist zwischen einer ersten Startphase, in der der Motor-Rotor aus dem Stillstand in Rotation versetzt wird, und einer zweiten Startphase, in der der Motor-Rotor eine Mindestdrehzahl erreicht hat und somit der Antriebsmotor in einen geregelten Betrieb übergehen kann, zu unterscheiden. Die vorliegende Erfindung betrifft ausschließlich die oben genannte erste Startphase.

Aus der DE 199 36 755 A1 ist ein Verfahren zum Anlassen eines Gleichstrommotors bekannt, bei dem die Stator-Spulen zum Anlaufen des Motor-Rotors nach einem starren Muster ,blind' angesteuert werden, wobei die Bestromung der Spulen mit einer derart hohen Spulen-Spannung erfolgt, dass der Rotor - sofern keine Blockade des Rotors vorliegt - in jedem Fall anlaufen würde. Das Drehen des Rotors wird sodann sensorlos mittels einer in den Spulen rückinduzierten Spannung erfasst, so dass eine Regelung der Bestromung der Spulen über einen Mikroprozessor erfolgen kann. Sollte kein Anlaufen des Rotors erkennbar sein, wird der Motor abgeschaltet.

Eine solche stark übererregte Ansteuerung der Spulen für ein Anlaufen des Rotors führt jedoch zu einer hohen Leistungsaufnahme (durch den hohen Blindleistungsanteil), wodurch letztlich der Wirkungsgrad des Kraftfahrzeug-Zusatzaggregat-Antriebsmotors reduziert wird. Insbesondere bei einer gering anliegenden Last bzw. bei einem relativ freilaufenden Motor-Rotor, der bereits bei einer sehr geringen Spulen-Spannung anlaufen würde, führt eine übererregte Ansteuerung zu einem erhöhten Leistungsverlust bzw. Wirkungsgradverlust.

Aus JP 2000253691 ist ein Verfahren zum Anlassen eines elektronisch kommutierten Antriebsmotors bekannt, bei dem beim Anlassen die Stator-spule mit einer Startwert-Spulenspannung bestromt wird, wobei der hierbei durch die Leistungselektronik fließende elektrische Strom überwacht wird. Sobald ein Stromabfall um einen Mindestwert detektiert wird, wird der Anlauf-Spannungswert um einen vorgegebenen Sicherheitswert auf einen Betriebs-Spannungswert erhöht, bei dem der Motor-Rotor in einem ungeregelten Betrieb betrieben werden kann.

Der Erfindung liegt daher die Aufgabe zugrunde, ein Verfahren bereitzustellen, das ein energiesparendes, effektives und sicheres Anlassen bzw. Anlaufen eines elektronisch kommutierten, bürstenlosen Kraftfahrzeug-Zusatzaggregat-Antriebsmotors ermöglicht. Ferner soll eine Vorrichtung bereitgestellt werden, mit der ein solches Verfahren betrieben werden kann.

Die Lösung der Aufgabe erfolgt erfindungsgemäß durch ein Verfahren mit den Merkmalen des Anspruchs 1.

Das Verfahren zum Anlassen eines elektronisch kommutierten, bürstenlosen Kraftfahrzeug-Zusatzaggregat-Antriebsmotors die folgenden Schritte:
Bestromen der Stator-Spule mit einer Spulen-Spannung, die einem ersten vorgegebenen Startwert entspricht. Der Startwert bzw. Start-Spannungswert kann ein minimaler Effektiv-Spannungswert sein, bei dem zwar ein erster Impuls zur Ausrichtung oder Verdrehung des Rotors erfolgen kann, jedoch ein Anlaufen bzw. Mitnehmen des Motor-Rotors noch nicht erfolgen würde. Der Start-Spannungswert ist variabel und kann für jeden Startvorgang neu eingestellt bzw. angepasst werden.

Die an der Stator-Spule angelegte Spulen-Spannung bzw. der Spulen-Spannungswert wird schrittweise um jeweils einen vorgegebenen Spannungsdifferenzwert erhöht. Das schrittweise Erhöhen erfolgt kontinuierlich und sprunghaft. Schrittweise bedeutet, dass zwischen zwei Erhöhungsphasen die Spannung zumindest für eine gewisse Zeit konstant gehalten wird. Kontinuierlich bedeutet in diesem Zusammenhang, dass die an der Spule angelegte Spulen-Spannung zwischen zwei Erhöhungsphasen nicht auf null abfällt, sondern fortwährend angelegt bleibt und in einem bestimmten Zeitintervall um den vorgegebenen Spannungsdifferenzwert sprunghaft erhöht wird. Das schrittweise Erhöhen der Spulen-Spannung kann starr nach einem vorgegebenen Muster erfolgen, beispielsweise in Abhängigkeit der Zeit, wobei das Ansteuern des Antriebsmotors in diesem Fall ,blind' erfolgt. Im Laufe des Erhöhens der Spulen-Spannung kann der Rotor beginnen, in ein sogenanntes "Toggeln" versetzt zu werden, bei dem der Motor-Rotor eine Hin-und-Her-Bewegung zwischen zwei Stator-Spulen durchführt. In diesem Zustand ist der Rotor instabil und es kann durch Zunahme des Stromflusses zu einer thermischen Erwärmung des Antriebsmotors kommen.

Während des Startvorgangs erfolgt ein Überwachen bzw. Messen eines in die bzw. durch die Leistungselektronik fließenden elektrischen Stroms. Bei der Überwachung des Stroms wird jeweils ein erster Stromwert mit einem zweiten Stromwert verglichen. Dadurch können der Stromverlauf und insbesondere Schwankungen oder Sprünge in dem Stromverlauf erfasst werden. Die Schwankungen in dem Stromverlauf stellen verhältnismäßig große Änderungen in dem Stromfluss dar und können entweder als Stromanstieg in Richtung eines größeren Stromflusses oder als Stromabfall in Richtung eines geringeren Stromflusses gerichtet sein. Das Überwachen des elektrischen Stroms kann kontinuierlich über zumindest den Zeitraum des Startvorgangs erfolgen, vorzugsweise erfolgt das Überwachen über den gesamten Zeitraum der Bestromung der Stator-Spule.

Bei Detektion eines Stromabfalls von einem ersten Stromwert auf einen geringeren zweiten Stromwert um einen Mindestwert kann der Motor-Rotor in einem Kipppunkt liegen und beginnen, dem mittels der Spulen erzeugten Drehfeld zu folgen und eine Drehbewegung in eine Richtung durchzuführen. Die Stromabnahme kommt durch eine rückinduzierte Spannung in der Spule zustande. Dementsprechend wird der Stromabfall um einen Mindestwert indiziell als ein Anlaufen des Rotors gewertet. Das Anlaufen des Motor-Rotors kann aus dem sog. 'Toggeln' heraus oder direkt aus dem Stillstand des Motor-Rotors erfolgen. Das Erfassen des abfallenden Stroms erfolgt insbesondere durch ein Vergleichen eines ersten Stromwertes mit einem zweiten Stromwert. Erst bei einem Erreichen eines Mindestwertes bzw. Überschreiten eines Schwellenwertes zwischen dem ersten Stromwert und dem zweiten Stromwert wird ein Detektieren eines Stromabfalls ausgelöst. Dazu kann ein Vergleich eines jeweils gemessenen Stromwertes bzw. eines Stromdifferenzwertes mit einem Referenz-Schwellenwert erfolgen. Das Detektieren und/oder Vergleichen des Stromabfalls erfolgt bevorzugt mittels einer Strom-Überwachungselektronik und/oder Steuerungselektronik. Die im Zeitpunkt des detektierten Stromabfalls bzw. des Rotoranlaufens angelegte Spulen-Spannung bzw. der Spulen-Spannungswert ist vorliegend die sogenannte Anlauf-Spannung.

Nach Detektion des Stromabfalls wird das schrittweise Erhöhen beendet und es folgt ein einmaliges weiteres Erhöhen, ein sogenanntes Sicherheits-Erhöhen, des beim Beenden an der Stator-Spule angelegten Anlauf-Spannungswertes um einen vorgegebenen Sicherheitswert. Nach dem Sicherheits-Erhöhen liegt die Spulen-Spannung bei einem ersten Betriebs-Spannungswert, bei dem der Motor-Rotor in einem ungeregelten Betrieb angetrieben bzw. der Antriebsmotor in einem ungeregelten Betrieb betrieben werden kann. Der vorgegebene Sicherheitswert ist vorzugsweise ein anderer Differenzwert als der zuvor zum schrittweisen Erhöhen der Spulen-Spannung vorgegebene Spannungsdifferenzwert, insbesondere ist der Sicherheitswert größer als der Spanungsdifferenzwert zum schrittweisen Erhöhen. Der vorgegebene Sicherheitswert kann applikationsspezifisch sein.

Durch dieses Verfahren kann der Zeitpunkt und/oder der Spulen-Anlauf-Spannungswert bei Anlaufen des Rotors erfasst werden und die hieraus gewonnene Information zur Steuerung und Regelung des Kraftfahrzeug-Zusatzaggregat-Antriebsmotors verwendet werden. Insbesondere kann hieraus eine erste Betriebsspannung für den ungeregelten Betrieb eingestellt werden und somit der Start des Antriebsmotors unter allen Randbedingungen mit einer auf den Betriebszustand angepassten Motorspannung erfolgen, was den Energieverbrauch des Antriebsmotors in dieser Phase deutlich reduzieren kann. Darüber hinaus kann durch das Erfassen des Stromabfalls eindeutig und sicher festgestellt werden, ob der Motor-Rotor in eine Drehbewegung versetzt ist oder blockiert. Ferner werden die Bauteile der Leistungselektronik und die Spulen im ungeregelten Betrieb thermisch weniger belastet.

Vorzugsweise erfolgt nach dem Sicherheits-Erhöhen der Spulen-Spannung auf den ersten Betriebs-Spannungswert ein Aufrechterhalten des ersten Betriebsspannungswertes so lange, bis die Steuerungselektronik von dem ungeregelten in einen geregelten Betrieb umschalten kann. Ein Umschalten auf den geregelten Betrieb ist dann möglich, wenn der Motor-Rotor eine Mindestdrehzahl erreicht hat, bei der die in den Stator-Spulen rückinduzierten Signale für eine Rotorlage-Messung ausreichend groß sind. Folglich wird bevorzugt solange ein Betriebs-Spannungswert an der Spule angelegt bis der Motor-Rotor auf eine Mindestdrehzahl hochgelaufen ist. Der Antriebsmotor kann sodann im geregelten Betrieb angetrieben werden. Alternativ kann nach dem Sicherheits-Erhöhen ein erstes Betriebs-Erhöhen der Spulen-Spannung um einen vorgegebenen Betriebsspannungsdifferenzwert auf einen zweiten Betriebs-Spannungswert erfolgen, so dass das Hochlaufen des Motor-Rotors beschleunigt wird. Auch bei diesem Vorgehen kann nach Erreichen der Rotor-Mindestdrehzahl auf den geregelten Betrieb umgeschalten werden.

Das schrittweise Erhöhen der Spulen-Spannung wird vorzugsweise beendet und/oder der Spannungswert verringert, falls der durch die Leistungselektronik fließende, überwachte elektrische Strom einen vorgegebenen Maximalwert übersteigt. In diesem Fall kann das Überschreiten eines maximalen Stromwertes als Anzeichen für ein Blockieren des Motor-Rotors gewertet werden.

Bevorzugt wird vor dem Bestromen der Stator-Spule mit dem Start-Spannungswert ein Test- und/oder Richt-Spannungsimpuls zum Ausrichten des Motor-Rotors bezüglich der Stator-Spule an der Stator-Spule angelegt. Bei dem Testimpuls bleibt der Motor-Rotor vorzugsweise unbewegt, bei dem Richtimpuls wird der Motor-Rotor bevorzugt in eine bestimmte Lage relativ zu der Stator-Spule versetzt. Insbesondere kann der Rotor in Richtung einer Stator-Spule gedreht und ausgerichtet werden, so dass auch eine Drehrichtung des Motor-Rotors vorgeben werden kann. Der Motor-Rotor vollzieht in dieser Situation noch keine vollständige Umdrehung.

Vorzugsweise erfolgt nach dem Detektieren des Stromabfalls ein Speichern zumindest eines Speicher-Spannungswertes, der gleich oder größer als der Anlauf-Spannungswert ist. Der Anlauf-Spannungswert ist derjenige Spannungswert, der bei Detektieren des Stromabfalls bzw. des Anlaufens des Rotors an der Stator-Spule anliegt. Somit kann ein Spulen-Spannungswert gespeichert werden, bei dem - bei Vorliegen der gleichen Randbedingungen - ein Anlaufen des Motor-Rotors erfolgen würde. Das Speichern kann in Form eines Dateneintrags in ein Speichermodul, wie einen Arbeitsspeicher eines Mikroprozessors, erfolgen. Neben dem Speichern des Speicher-Spannungswertes kann zusätzlich ein Speichern weiterer Spannungswerte, wie beispielsweise die ursprüngliche Start-Spannung und/oder Betriebs-Spannung erfolgen. Ferner können Randbedingungen und/oder andere Daten gespeichert werden, insbesondere Betriebszeitpunkte und/oder Betriebstemperaturen. Dadurch kann der Speicher-Spannungswert für einen bestimmten Betriebspunkt, nämlich dem Zeitpunkt eines sicheren Rotor-Anlaufens, festgestellt und beispielsweise zu Wartungs- und Überprüfzwecke und/oder zur Verwendung für nachfolgende Startvorgänge gespeichert werden.

Vorzugsweise wird der gespeicherte Speicher-Spannungswert bei zumindest einem nachfolgenden Startvorgang des Antriebsmotors ausgelesen und/oder als Start-Spannungswert verwendet, so dass das erste Bestromen der Stator-Spule mit dem gespeicherten Speicher-Spannungswert erfolgt. Insbesondere erfolgt die Verwendung des Speicher-Spannungswertes als Start-Spannungswert bei solchen Startvorgängen, bei denen die gleichen Randbedingungen vorliegen, beispielsweise die gleiche Temperatur. Sofern ein Speicher-Spannungswertes als Start-Spannung verwendet wird, kann das schrittweise Erhöhen der Start-Spannung für zumindest einen Schritt oder für den gesamten Startvorgang ausgesetzt werden. Dadurch liegt die Start-Spannung für einen gewissen Zeitraum an der Spule an, wodurch der Motor-Rotor mittels des erzeugten Drehfeldes in Bewegung, insbesondere in eine Rotation, versetzt werden kann. In einer Ausgestaltung kann die angelegte einer Speicher-Spannung entsprechende Start-Spannung für den gesamten ungeregelten Betrieb des Antriebsmotors an der Stator-Spule angelegt bleiben.

Das Speichern des Speicher-Spannungswertes kann zudem für eine Anpassung einer Betriebskennlinie des Antriebsmotors, beispielsweise einer U/f-Kennlinie, verwendet werden. Insbesondere können die ermittelten Daten für die Erstellung eines optimierten Kennfeldes herangezogen werden, das für nachfolgende Startvorgänge verwendet werden kann.

Bevorzugt umfasst der Kraftfahrzeug-Zusatzaggregat-Antriebsmotor, der einen mit mindestens einer Stator-Spule versehenen Motor-Stator und einen mit mindestens einem Permanentmagneten versehenen bzw. permanentmagnetischen Motor-Rotor aufweist, eine Vorrichtung zum Anlassen eines elektrischen Kraftfahrzeug-Zusatzaggregat-Antriebsmotors. Die Vorrichtung zum Anlassen umfasst zumindest eine Leistungselektronik, eine Strom-Überwachungselektronik und eine Steuerungselektronik.

Die Leistungselektronik ist bevorzugt geeignet, an der Stator-Spule eine elektrische Spulen-Spannung mit einem veränderbaren Spannungswert anzulegen. Dazu ist die Leistungselektronik von der Steuerungselektronik ansteuerbar. Insbesondere kann die Leistungselektronik mittels des Ansteuerungs-Signals dahingehend angesteuert werden, dass der an der Stator-Spule anliegende Spulen-Spannungswert zur Erzeugung des Drehfeldes zum Anlaufen bzw. Hochlaufen des Rotors erhöht oder alternativ, beispielsweise bei Erfassen eines Strom-Maximalwertes, verringert oder abgeschaltet wird. Die Leistungselektronik kann dadurch eine innerhalb eines definierten Werte-Bereichs variabel einstellbare bzw. getaktete Spulen-Spannung an der Stator-Spule anlegen. Die Änderung der Spulen-Spannung erfolgt insbesondere durch Änderung einer Taktung gemäß einem Tastverhältnis. Die hieraus resultierende Effektiv-Spannung, die an der Stator-Spule anlegbar ist, kann deutlich kleiner sein als die Versorgungsspannung der Leistungselektronik. Dazu kann die Leistungselektronik wenigstens einen Leistungshalbleiter aufweisen. Der Werte-Bereich kann von einer Minimal-Spulen-Spannung, beispielsweise einer Test- oder Richtspannung zum Ausrichten des Motor-Rotors, bis zu einer Maximal-Spulen-Spannung, bei der der Antriebsmotor unter Volllast betrieben werden kann, ausgestaltet sein. Dabei kann die Maximal-Spulen-Spannung der Versorgungsspannung der Leistungselektronik entsprechen.

Die Strom-Überwachungselektronik zum Überwachen eines durch die Leistungselektronik fließenden elektrischen Stroms ist bevorzugt derart ausgebildet, um einen an der Leistungselektronik abfallenden Strom bzw. Stromabfall von einem ersten Stromwert auf einen geringeren zweiten Stromwert zu detektieren. Dazu kann die Strom-Überwachungselektronik einen Stromsensor bzw. eine Strommess-Schaltung aufweisen, mit der der durch die Leistungselektronik fließende elektrische Strom kontinuierlich erfasst werden kann. Nach dem Detektieren eines Stromabfalls gibt die Strom-Überwachungselektronik bevorzugt ein Signal an die Steuerungselektronik. Es ist ferner möglich, dass die Strom-Überwachungselektronik in der Steuerungselektronik integriert ist.

Bevorzugt ist die Steuerungselektronik ist zur Steuerung und Regelung der Spulen-Spannung mit der Leistungselektronik und der Strom-Überwachungselektronik verbunden. Dadurch kann die Steuerungselektronik die Leistungselektronik derart ansteuern, dass die an der Stator-Spule anliegende Spulen-Spannung angelegt, erhöht oder verringert wird. Die Ansteuerung der Leistungselektronik kann in Abhängigkeit eines vorgegebenen Signals erfolgen, beispielsweise eines Signals zum Anlassen des Antriebsmotors. Ferner kann das Signal ein Mess-Signal eines durch die Strom-Überwachungselektronik erfassten elektrischen Stroms sein, so dass die Steuerungselektronik die Leistungselektronik in Abhängigkeit des elektrischen Stroms ansteuert. Beispielsweise kann die Steuerungselektronik bei einem Detektieren eines Stromabfalls die Leistungselektronik derart ansteuern, dass ein schrittweises Erhöhen der Spulen-Spannung beendet, ein an der Spule anliegender Spannungswert, insbesondere ein Anlauf-Spannungswert, erfasst und die Spulen-Spannung einmalig um einen Sicherheits-Spannungswert erhöht wird. Zur Ansteuerung der Leistungselektronik kann die Steuerungselektronik einen Anlaufmustergenerator zum Generieren und/oder Anpassen einer Betriebskennlinie aufweisen. Insbesondere kann die Steuerungselektronik als ein Mikroprozessor ausgebildet sein.

In einer bevorzugten Ausgestaltung der Erfindung ist ein Speicher-Lese-Modul zum Speichern und/oder Auslesen mindestens eines Spulen-Spannungswertes vorgesehen, insbesondere eines sogenannten Speicher-Spannungswertes. Dadurch kann der Speicher-Spannungswert für Wartungszwecke, Analysezwecke oder für einen nachfolgenden Start verwendet werden. Das Speicher-Lese-Modul kann ein dauerhafter Speicher oder ein temporärer Speicher sein, wie ein Arbeitsspeicher eines Mikroprozessors. Das Speicher-Lese-Modul kann geeignet sein, mehrere Spannungswerte oder Daten zu speichern.

Nachfolgend wird die Erfindung anhand einer bevorzugten Ausführungsform unter Bezugnahme auf die anliegenden Zeichnungen näher erläutert.
Figur 1 zeigt schematisch einen Kraftfahrzeug-Zusatzaggregat-Antriebsmotor mit einer Vorrichtung zum Anlassen des Antriebsmotors,
Figur 2 zeigt schematisch ein Flussdiagramm zur Veranschaulichung des Verfahrens zum Anlassen eines Kraftfahrzeug-Zusatzaggregat-Antriebsmotors,
Figur 3 zeigt schematisch ein Diagramm zum Strom-Spannungsverlauf bei einem ersten Anlassen eines Kraftfahrzeug-Zusatzaggregat-Antriebsmotors,
Figur 4 zeigt schematisch ein Diagramm zum Strom-Spannungsverlauf bei einem nachfolgenden Anlassen eines Kraftfahrzeug-Zusatzaggregat-Antriebsmotors.

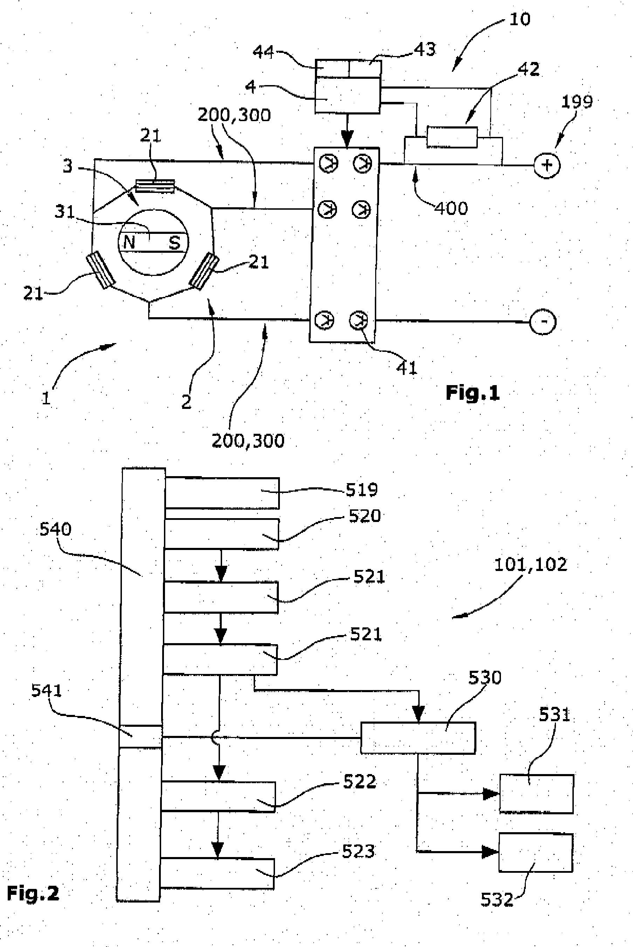

In der Figur 1 ist schematisch ein Kraftfahrzeug-Zusatzaggregat-Antriebsmotor 1 mit einer Vorrichtung 10 gezeigt. Der Antriebsmotor 1 weist einen Motor-Stator 2 und einen Motor-Rotor 3 auf. Der Motor-Rotor 3 kann über eine nicht dargestellte Welle mit einem nicht dargestellten Pumpenrad einer nicht dargestellten Fluidpumpe verbunden sein. Der Stator 2 des Antriebsmotor 1 weist drei bestrombare Stator-Spulen 21 auf, der Rotor 3 einen Permanentmagneten 31 mit einem Nordpol N und einem Südpol S. Zur Ansteuerung bzw. Bestromung der Spulen 21 weist der Antriebsmotor 1 eine Steuerungselektronik 4 mit einer Leistungselektronik 41 auf, die geeignet ist, die Spulen 21 mit einer definierten Spulen-Spannung 200 und einer Anlauf-Drehfrequenz 300 zu bestromen, wobei der Spulen-Spannungswert 201, 200a, 202, 200b, 200c, 203, 204 einstellbar ist. Die einstellbaren Spulen-Spannungswerte 201, 200a, 202, 200b, 200c, 203, 204 sind in einem Speicher 43 der Steuerungselektronik 4 hinterlegt und von dort abrufbar.

Die an der Spule 21 anliegende veränderbare Spulen-Spannung 200 wird insbesondere dadurch erreicht, dass eine Versorgungsspannung 199 des Antriebsmotors 1 in einer Leistungselektronik 41 getaktet wird, z.B. mit einer Frequenz von mehreren kHz und einem vorgegebenen Tastverhältnis. Dazu kann die Steuerungselektronik 4 die Leistungselektronik 41 mit einem bestimmten Tastverhältnis ansteuern, beispielsweise beginnt eine Ansteuerung mit einem Start-Tastverhältnis von 22/250, was etwa 10% der Versorgungsspannung 199 entspricht.

An dem Antriebsmotor 1 ist eine Strom-Überwachungselektronik 42 zum Überwachen 540 eines durch die Leistungselektronik 41 fließenden elektrischen Stroms 400 vorgesehen. Die Strom-Überwachungselektronik 42 ist als eine Strom-Messschaltung mit einem niederohmigen Messwiderstand zwischen einer Spannungsquelle und einer Last ausgebildet. Der elektrische Strom 400 kann über ein in Verhältnissetzen ermittelt werden. Die Strom-Überwachungselektronik 42 ist geeignet, einen an der Leistungselektronik 41 abfallenden Strom bzw. Stromabfall 403 von einem ersten Stromwert 401 auf einen geringeren zweiten Stromwert 402 zu detektieren.

Zur Ansteuerung der Leistungselektronik 41 weist die Steuerungselektronik 4 ein Ansteuerungsmustergeneratormodul 44 auf, das geeignet ist, ein Ansteuerungsmuster zur Bestromung der Spulen 21 zu definieren. Die Steuerungselektronik 4 ist derart mit der Leistungselektronik 41 und der Strom-Überwachungselektronik 42 verbunden, um beispielsweise in Abhängigkeit eines Detektierens 541 eines Stromabfalls 403 die Leistungselektronik 41 derart anzusteuern, dass der an der Spule 21 angelegte Spannungswert 201, 200a, 202, 200b, 200c, 203, 204 erhöht oder verringert wird.

Die Figur 2 zeigt ein Flussdiagramm zur Veranschaulichung eines Verfahrens zum Anlassen 101, 102 eines Kraftfahrzeug-Zusatzaggregat-Antriebsmotor 1, mit dem ein Anlaufen des Rotors 3 erkannt werden kann. Dazu wird in einem ersten Schritt 519 ein Richt-Spannungsimpuls an der Stator-Spule 21 angelegt, um den Motor-Rotor 3 in Richtung einer Stator-Spule 21 auszurichten.

In einem nachfolgenden Schritt 520 wird eine Spulen-Spannung 200 mit einem ersten vorgegebenen Start-Spannungswert 201 an der Stator-Spule 21 angelegt. Der Start-Spannungsimpuls 201 weist einen derart geringen Wert auf, dass der Rotor 3 noch nicht beginnt, sich zu drehen.

In einem nächsten Schritt 521 erfolgt ein Erhöhen der an der Spule 21 angelegten Spannung 200 um einen vorgegebenen Spannungsdifferenzwert 200a. Die an der Spule 21 angelegte Spannung 200 wird folglich um den Spannungsdifferenzwert 200a erhöht. Der Spannungsdifferenzwert 200a ist vorgegeben und ist vorliegend in einem Speicher 43 abgelegt und von dort abrufbar. Der Schritt 521 wird nun so lange wiederholt bzw. die Spannung 200 so lange um den Spannungsdifferenzwert 200a erhöht, bis ein Stromabfall 403 von einem ersten Stromwert 401 auf einen geringeren zweiten Stromwert 402 detektiert wird. Hierzu erfolgt während des gesamten Startvorgangs 101, 102 ein Überwachen 540 des an der Leistungselektronik 41 fließenden elektrischen Stroms 400.

Das Detektieren eines Stromabfalls 403 erfolgt in dem Schritt 541. Dieses kann beispielsweise durch ein kontinuierliches Vergleichen des ersten Stromwertes 401 mit dem nachfolgenden zweiten Stromwert 402 erfolgen. Der zwischen dem ersten Stromwertes 401 und dem zweiten Stromwert 402 liegende Stromdifferenzwert 400a wird vorliegend mit einem in dem Speicher 43 gespeicherten Schwellenwert verglichen. Bei Überschreiten des gespeicherten Schellenwertes wird in der Steuerungselektronik 4 ein Signal zur Ansteuerung der Leistungselektronik 41 erzeugt. In dem Moment des Stromabfalls 403 erfolgt ein Anlaufen des Rotors 3.

In dieser Ausgestaltung der Erfindung wird derjenige Spannungswert 202, der bei dem Detektieren 541 des Stromabfalls 403 anliegt, in einem Speicher 43 gespeichert. Dies erfolgt in dem Schritt 530. Bei einem nachfolgenden Startvorgang 102 des Antriebsmotors 1 wird der in dem Speicher 43 gespeicherte Spannungswert 202 in einem Schritt 531 aus dem Speicher 43 ausgelesen bzw. abgerufen und als Start-Spannungswert 201 eingesetzt, optional mit einem zusätzlichen Sicherheitszuschlag.

Dieses Vorgehen der voranstehenden Schritte zum Anlaufen des Rotors 3 kann für verschiedene Betriebspunkte durchgeführt und in einer Betriebskennlinie oder einem Betriebskennfeld abgelegt werden und/oder bei jedem Startvorgang 101, 102 von Neuem erfolgen. Das Optimum der Leistungsaufnahme des Antriebsmotors 1 kann sodann oder nach einer weiteren einmaligen Erhöhung der Spulen-Spannung 200 um einen vorgegebenen Sicherheitswert 200b auf einen ersten Betriebs-Spannungswert 203 erreicht werden, was in einem nächsten Schritt 522 vorgesehen ist. Bei der ersten Betriebsspannung 203 wird der Antriebsmotor 1 in einem ungeregelten Betrieb angesteuert. In der vorliegenden Ausführung der Erfindung erfolgt sodann noch ein weiteres Erhöhen 523 der Spulen-Spannung 200 bis der Antriebsmotor 1 in einen geregelten Betrieb übergehen kann.

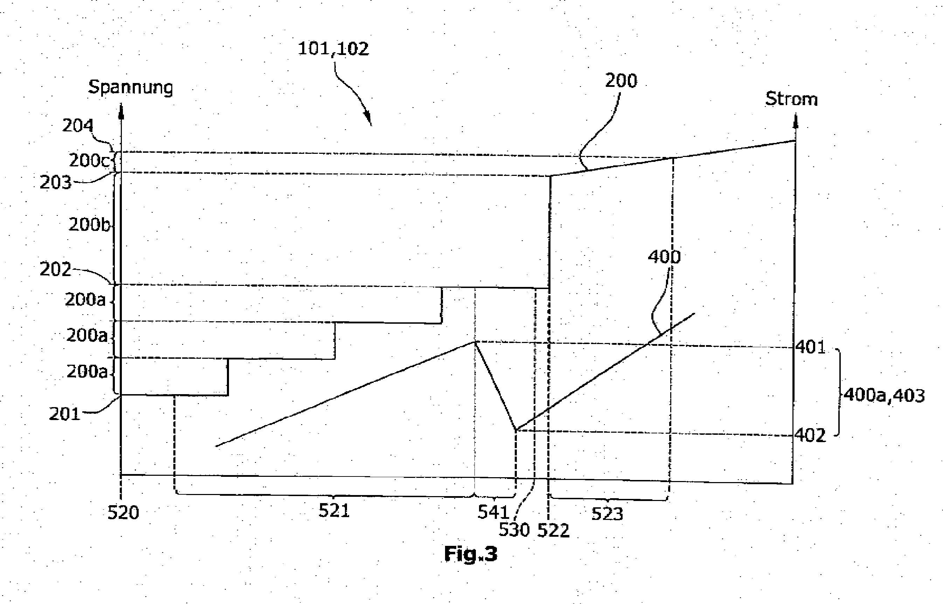

In der Figur 3 ist ein Diagramm zum Strom-Spannungsverlauf bei einem Anlassen 101, 102 des Kraftfahrzeug-Zusatzaggregat-Antriebsmotor 1 gezeigt. Das Kurvendiagramm zeigt insbesondere den zeitlichen Verlauf der an einer Stator-Spule 21 angelegten Spulen-Spannung 200 sowie des an der Leistungselektronik 41 überwachten elektrischen Stroms 400. Es ist deutlich zu erkennen, wie die Spulen-Spannung 200 von dem Start-Spannungswert 201 kontinuierlich jeweils um einen Spannungsdifferenzwert 200a erhöht wird. Mit dem schrittweisen Erhöhen der Spulen-Spannung 200 steigt auch der Stromfluss 400. An einem bestimmten Punkt, an dem die Spulen-Spannung 200 den Anlauf-Spannungswert 202 erreicht hat, fällt der Strom 400 schlagartig ab und beginnt auf einem niedrigeren Niveau zu bleiben oder - wie vorliegend - erneut zu steigen. Dieser Punkt ist der Kipppunkt des Antriebsmotors 1, bei dem der Rotor 3 beginnt, dem mittels der Spulen 21 erzeugten Drehfeld zu folgen.

Die Spulen-Spannung 200 wird sodann erneut um einen Sicherheitswert 200b auf eine erste Betriebs-Spannung 203 erhöht, bei der der Antriebsmotor 1 in dem ungeregelten Betrieb weiter anläuft. In diesem Zustand folgt der Rotor 3 sicher einem Drehfeld, das aus einer starren bzw. blinden Ansteuerung der Spulen 21 nach einem vorgegebenen Muster erfolgt.

In der in Figur 3 gezeigten Ausführung der Erfindung folgt ein stetiges Steigern der Spulen-Spannung 200 von dem ersten Betriebs-Spannungswert 203 auf einen zweiten Betriebsspannungswert 204 um einen Spannungsdifferenzwert 200c. Mit der Steigerung der Spannung 200 kann korrespondierend ein Hochlaufen der Drehzahl oder Beschleunigen des Rotors 3 erfolgen. Wenn der Rotor 3 bei einer Betriebs-Spulen-Spannung 204 schließlich eine Mindestdrehzahl erreicht hat, kann die Rotorlage messbar sein und der Betrieb des Antriebsmotors 1 kann von dem ungeregelten in einen geregelten Betrieb übergehen.

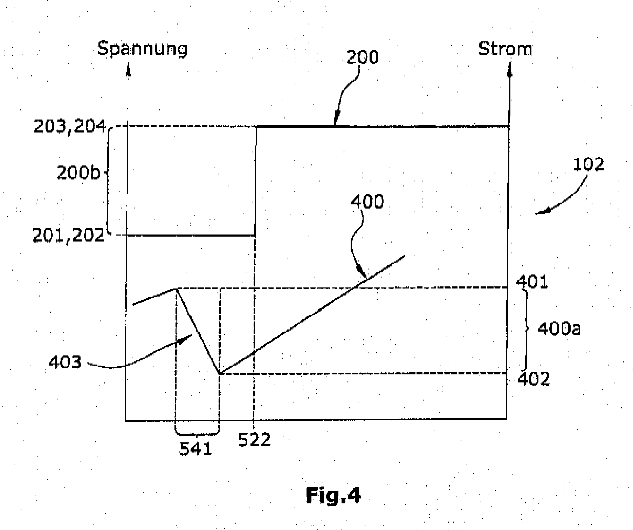

In der Figur 4 ist ein Diagramm zum Strom-Spannungsverlauf mit einer Spulen-Spannung 200 und einem elektrischen Strom 400 bei einem zumindest zweiten bzw. nachfolgenden Anlassen 102 des Kraftfahrzeug-Zusatzaggregat-Antriebsmotor 1 gezeigt. Das bedeutet, dass der Antriebsmotor 1 bereits zuvor das in Figur 1 gezeigte Anlassverfahren 101 durchlaufen hat und in dem Speicher 43 ein dem Anlauf-Spannungswert 202 des ersten Startvorgangs 101 entsprechender Speicher-Spannungswert gespeichert ist.

Der Speicher-Spannungswert 202 wird nun in dem nachfolgenden Startvorgang 102 verwendet, bei dem der Start-Spannungswert 201 dem Speicher-Spannungswert 202 gleichgesetzt wird. Das erste Bestromen 520 der Stator-Spule 21 erfolgt somit mit dem Speicher-Spannungswert 202. Bei diesem Spannungswert (Speicher-Spannungswert 202) ist der Motor-Rotor 3 geeignet, direkt anzulaufen, so dass ein Stromabfall 403 um einen Mindestwert 400a unmittelbar detektierbar 541 ist.

Nach dem Detektieren des Stromabfalls 403 wird die Spannung um einen Sicherheitswert 200b auf eine Betriebsspannung 203, 204 erhöht. Ein weiteres Steigern der Spannung 200 ist in der in Figur 4 gezeigten Ausführung - im Gegensatz zu der in Figur 3 gezeigten Ausführung - nicht vorgesehen. Der Rotor 3 kann vorliegend bei der Betriebsspannung 203, 204 im Laufe der Zeit eine Mindestdrehzahl erreichen, so dass der Antriebsmotor 1 in den geregelten Betrieb umgeschaltet werden kann.

Alternativ kann als Start-Spannungswert 201 ein Spannungswert 200 eingesetzt werden, der der Summe aus dem Speicher-Spannungswert 202 und einem Sicherheitswert 200b entspricht. Der Start-Spannungswert 201 umfasst folglich schon den Sicherheitswert 200b. Dadurch kann der Motor 1 unmittelbar mit dem Betriebsspannungswert 203, 204 angelassen werden. In diesem Fall kann ein Stromabfall 403 ausbleiben, wobei die Stromaufnahme dem Drehfeld des Stators unmittelbar folgt.

### Referenzliste

- 1: Kraftfahrzeug-Zusatzaggregat-Antriebsmotor
- 10: Vorrichtung
- 2: Motor-Stator
- 21: Stator-Spule
- 3: Motor-Rotor
- 31: Permanentmagnet
- 4: Steuerungselektronik
- 41: Leistungselektronik
- 42: Strom-Überwachungselektronik
- 43: Speicher-Lese-Modul
- 44: Anlaufmustergeneratormodul

- 101: Anlassen, Startvorgang
- 102: nachfolgender Startvorgang

- 199: Versorgungsspannung
- 200: Spulen-Spannung
- 201: Start-Spannung; Start-Spannungswert
- 200a: Spannungsdifferenzwert
- 202: Anlauf-Spannung; Anlauf-Spannungswert
- 200b: Sicherheitswert
- 200c: Betriebsspannungsdifferenzwert
- 203: erste Betriebs-Spannung; erster Betriebs-Spannungswert
- 204: zweite Betriebs-Spannung; zweiter Betriebs-Spannungswert

- 300: Anlauf-Drehfrequenz

- 400: elektrischer Strom
- 401: Stromfall-Startpunkt; oberer Stromsprungwert
- 402: Stromfall-Endpunkt; unterer Stromsprungwert
- 403: Stromabfall
- 400a: Mindestwert, Stromsprungdifferenzwert

- 519: Anlegen einer Richt-Spannung
- 520: Anlegen einer Spulen-Spannung
- 521: schrittweises Erhöhen der Spulen-Spannung
- 522: Sicherheits-Erhöhen der Spulen-Spannung
- 523: Betriebs-Erhöhen der Spulen-Spannung
- 530: Speichern des Spannungswertes
- 531: Auslesen des Spannungswertes
- 532: Anpassung der Betriebskennlinie

- 540: Überwachen des elektrischen Stroms
- 541: Detektieren eines Stromabfalls

## Patentansprüche

1. Verfahren zum Anlassen (101, 102) eines elektronisch kommutierten, bürstenlosen Kraftfahrzeug-Zusatzaggregat-Antriebsmotors (1), der einen Motor-Stator (2) mit mindestens einer Stator-Spule (21) und einen permanentmagnetischen Motor-Rotor (3) aufweist, wobei die Stator-Spule (21) mittels einer Steuerungselektronik (4) und einer Leistungselektronik (41) zur Erzeugung eines Drehfeldes zum Antreiben des Motor-Rotors (3) mit einer vorgegebenen Spulen-Spannung (200) und einer vorgegebenen konstanten Anlauf-Drehfrequenz (300) bestromt wird, mit den folgenden Schritten:
- Bestromen (520) der Stator-Spule (21) mit einer einem Startwert (201) entsprechenden Spulen-Spannung (200),
- schrittweises Erhöhen (521) der Spulen-Spannung (200) und
- Überwachen (540) eines durch die Leistungselektronik (41) fließenden elektrischen Stroms (400), wobei
- bei Detektion (541) eines Stromabfalls (403) um einen Mindestwert (400a) erfolgt folgendes:
- Beenden des schrittweisen Erhöhens (521) und
- einmaliges Sicherheits-Erhöhen (522) eines beim Beenden des schrittweisen Erhöhens an der Stator-Spule (21) angelegten Anlauf-Spannungswertes (202) um einen vorgegebenen Sicherheitswert (200b) auf einen ersten Betriebs-Spannungswert (203), bei dem der Motor-Rotor (3) in einem ungeregelten Betrieb angetrieben werden kann.

2. Verfahren nach Anspruch 1, wobei nach dem Sicherheits-Erhöhen (522) der Spulen-Spannung (200) auf den ersten Betriebs-Spannungswerts (203) ein Aufrechterhalten des ersten Betriebs-Spannungswerts (203) so lange erfolgt, bis die Steuerungselektronik (4) von dem ungeregelten Betrieb in einen geregelten Betrieb übergehen kann.

3. Verfahren nach einem der Ansprüche 1 oder 2, wobei das schrittweise Erhöhen (521) der Spulen-Spannung (200) beendet wird, falls der überwachte elektrische Strom (400) einen Maximalwert übersteigt.

4. Verfahren nach einem der voranstehenden Ansprüche, wobei vor dem Bestromen (520) der Stator-Spule (21) mit dem Start-Spannungswert (201) ein Bestromen (519) der Stator-Spule (21) mit einem Richt-Spannungsimpuls zum Ausrichten des Motor-Rotors (3) an der Stator-Spule (21) erfolgt.

5. Verfahren nach einem der voranstehenden Ansprüche, wobei nach dem Detektieren (541) des Stromabfalls (403) ein Speichern (530) eines Speicher-Spannungswertes (202, 203, 204) erfolgt, der gleich oder größer als der Anlauf-Spannungswert (202) ist.

6. Verfahren nach Anspruch 5, wobei der Speicher-Spannungswert (202, 203, 204) bei zumindest einem nachfolgenden Startvorgang (102) des Antriebsmotors (1) als Start-Spannungswert (201) an der Stator-Spule (21) angelegt (520) wird.

7. Verfahren nach einem der Ansprüche 5 oder 6, wobei mittels des Speicher-Spannungswertes (202, 203, 204) eine Anpassung (532) einer Betriebskennlinie des Kraftfahrzeug-Zusatzaggregat-Antriebsmotors (1), insbesondere einer U/f-Kennlinie, erfolgt.

## Claims

1. Method for starting (101, 102) an electronically commutated, brushless drive motor (1) of an auxiliary assembly of a motor vehicle, which drive motor has a motor stator (2) comprising at least one stator coil (21) and a permanent-magnet motor rotor (3), wherein power is supplied to the stator coil (21) with a predefined coil voltage (200) and a predefined constant start-up rotation frequency (300) by means of a control electronics system (4) and a power electronics system (41) for generating a rotating field in order to drive the motor rotor (3), said method comprising the following steps:
- supplying power (520) to the stator coil (21) with a coil voltage (200) which corresponds to a start value (201),
- increasing (521) the coil voltage (200) in steps, and
- monitoring (540) an electric current (400) flowing through the power electronics system (41), wherein
- when a voltage drop (403) by a minimum value (400a) is detected (541), the following procedure is followed:
- the operation of increasing (521) in steps is terminated, and
- a start-up voltage value (202), which is applied to the stator coil (21) during the termination operation, is increased once for safety reasons (522) by a predefined safety value (200b) to a first operating voltage value (203) at which the motor rotor (3) can be driven in an unregulated mode.

2. Method of claim 1, wherein after the safety increase (522) of the coil voltage (200) to the first operation voltage value (203), the first operation voltage value (203) is maintained until the control electronics system (4) can switch from the unregulated to a regulated mode.

3. Method of one of claims 1 or 2, wherein the step-wise increase (521) of the coil voltage (200) is preferably terminated if the monitored electric current (400) exceeds a maximum value.

4. Method of one of the preceding claims, wherein prior to energizing (520) the stator coil (21) with the start voltage value (201), the stator coil (21) is energized (519) with a setting voltage pulse for aligning the motor rotor (3) with respect to the stator coil (21).

5. Method of one of the preceding claims, wherein after the detection (541) of the current drop (403), at least one memory voltage value (202, 203, 204) is stored (530) which is equal to or greater than the start-up voltage value (202).

6. Method of claim 5, wherein the memory voltage value (202, 203, 204) is applied (520) to the stator coil (21) as the start voltage value (201) in at least one subsequent start operation (102) of the drive motor (1).

7. Method of one of claims 5 or 6, wherein the memory voltage value (202, 203, 204) is used to adjust (532) an operation characteristic of the drive motor (1), e.g. a U/f characteristic.

## Revendications

1. Procédé de démarrage (101, 102) d'un moteur (1) d'entrainement supplémentaire de véhicule automobile sans balai à commutation électronique, avec un stator de moteur (2) avec au moins une bobine de stator (21) et un rotor de moteur à aimant permanent (3), la bobine de stator (21) étant alimentée, par une électronique de commande (4) et une électronique de puissance (41), en une tension de bobine prédéterminée (200) et une fréquence de rotation de démarrage prédéterminée constante (300) afin de générer un champ tournant pour entrainer le rotor du moteur (3), avec les étapes suivantes:
- alimenter (520) la bobine de stator (21) en une tension de bobine (200) correspondant à une valeur initiale (201),
- augmenter graduellement (521) la tension de la bobine (200) et
- surveiller (540) un courant électrique (400) passant par l'électronique de puissance (41), dans lequel
- lors de la détection (541) d'une chute de courant (403) par une valeur minimale (400a), le suivant se passe:
- l'augmentation graduelle (521) est terminée et
- l'augmentation de sécurité (522) unique d'une valeur de tension de démarrage (202) appliquée à la bobine de stator (21) lors de la terminaison de l'augmentation graduelle par une valeur de sécurité prédéterminée (200b) à une première valeur de tension d'opération (203) à laquelle le rotor du moteur (3) peut être entrainé dans une opération non réglée.

2. Procédé selon la revendication 1, dans lequel, après l'augmentation de sécurité (522) de la tension de bobine (200) jusqu'à la première valeur de tension d'opération (203), la première valeur de tension d'opération (203) est maintenue jusqu'à ce que l'électronique de commande (4) peut passer de l'opération non régée à une opération réglée.

3. Procédé selon l'une quelconque des revendications 1 ou 2, dans lequel l'augmentation graduelle (521) de la tension de bobine (200) est terminée si le courant électrique surveillé (400) dépasse une valeur maximale.

4. Procédé selon l'une quelconque des revendications précédentes, dans lequel, avant d'alimenter (520) la bobine de stator (21) avec la valeur de tension de démarrage (201), la bobine de stator (21) est alimentée (519) avec une impulsion de tension directionnelle pour aligner le moteur rotor (3) sur la bobine de stator (21).

5. Procédé selon l'une quelconque des revendications précédentes, dans lequel, après la détection (541) de la chute de courant (403), une valeur de tension de stockage (202, 203, 204) est stockée, la valeur étant égale ou supérieure à la valeur de tension de démarrage (202).

6. Procédé selon la revendication 5, dans lequel la valeur de tension de stockage (202, 203, 204) est appliquée (520) à la bobine de stator (21) comme valeur de tension de démarrage (201) dans au moins une opération de démarrage ultérieure (102) du moteur d'entrainement (1).

7. Procédé selon l'une des revendications 5 ou 6, dans lequel, utilisant la valeur de tension de stockage (202, 203, 204), une adaptation (532) d'une caractéristique d'opération du moteur d'entrainement (1) se passe, en particulier une caractéristique U/f.
